# EUROPEAN PATENT APPLICATION

(11) **EP 4 789 745 A1**
(43) Date of publication of application: **12.08.2026**
(21) Application number: 25305164.3
(22) Date of filing: 05.02.2025
(51) Int. Cl.: B01D 25/02, B01D 25/26

(54) **FILTERING COMPONENT FOR A FILTERING UNIT WITH BACKWASHING**

(71) Applicant: Alfa Laval Moatti, 78990 Elancourt (FR)
(72) Inventor: NICOLLE, Adrien, 78990 ELANCOURT (FR)
(74) Representative: Alfa Laval Attorneys

(57) **Abstract**

A filtering component for a filtering unit with backwashing, the filtering component comprising an inner edge (24), an outer edge (26) and a filtering medium (22), and circumferentially distributed ribs (30) extending between the inner edge (24) and the outer edge (26) and holding the filtering medium (22), wherein at least one of the ribs (32) comprises a projection (36) towards at least one first rib (40) that is adjacent thereto, and wherein the at least one first rib (40) comprises a first rectilinear portion (42), a connection portion (44) and a second rectilinear portion (46) in this order, the second rectilinear portion (46) being closer to the projection (36) than the first rectilinear portion (42), wherein the connection portion (44) is bent so that the second rectilinear portion (46) is shifted away from the projection (36) with respect to an imaginary straight line (42a) extending the first rectilinear portion (42).

## Description

### TECHNICAL FIELD

The present disclosure relates to a filtering component for a filtering unit with automatic backwashing, and such a filtering unit. More particularly, the disclosure relates to an improvement in the hydraulic performance of such a filtering unit.

### TECHNOLOGICAL BACKGROUND

International application WO 2012/028824 describes a filtering unit comprising at least two filter components, each filter component having an internal face, an external face, a filtering mesh, two concentric circular edges, respectively an inner edge and an outer edge between which said filtering mesh extends, and radial ribs provided at least on the internal face, said radial ribs extending between said concentric edges and being distributed circumferentially in order to form distinct sectors on said internal face. Said filter components are configured to be assembled against each other so that their respective internal faces face each other so as to define a space between them, wherein said radial ribs delimiting the sectors form circumferential compartments in said space. At least one of said inner edge and outer edge has passages respectively communicating with corresponding ones of the sectors. The filter components are stacked along an axial direction.

By stacking a selected number of filter component pairs, a desired filter area is obtained for an intended application. Typically, the fluid for filtering penetrates into the stack via passages of the inner edge, passes through the filtering mesh, and, once purified, exits via other passages defined in the outer edge. Naturally, the flow of fluid through the filtering mesh could be reversed or arranged in some other way.

The filter described in that publication further comprises a divider arranged coaxially with the filter elements, the divider having distinct distribution columns, and a rotary backwashing distributor. The rotary backwashing distributor has a shutter provided with a discharge opening and is mounted to rotate so that said discharge opening is periodically and selectively put into communication with each distribution column, whereby each distribution column periodically and selectively establishes communication between the discharge opening and respective ones of the passages.

In this way, periodically, the fluid flow is reversed in the sectors corresponding to passages in fluid communication with the discharge opening, which enables backwashing to be performed in these sectors due to the pressure gradient across the filtering mesh, i.e. the pressure gradient between the external face side and the internal face side. The fluid used for backwashing is then discharged through the discharge opening.

In order to increase the filtering efficiency of such a filtering unit, it is desirable to decrease the fraction of the filtering mesh that is being backwashed at a given time. A solution in this perspective consists in decreasing the size of the sectors, e.g. by increasing the number of sectors. However, in doing so, projections that serve a mechanical purpose, e.g. eyelets for assembling the filtering component to another filtering component, take a relatively larger space as compared to the reduced sectors. This may result in an unbalanced flow in that area of the filtering mesh.

Therefore, there is a need for a new type of filtering unit, or a new type of filtering component thereof.

### SUMMARY

In this respect, the present disclosure relates to a filtering component for a filtering unit with backwashing, the filtering component being annular and comprising an inner edge, an outer edge and a filtering medium extending between the inner edge and the outer edge, the filtering component having an internal face and an external face on either side of the filtering medium, and circumferentially distributed ribs extending between the inner edge and the outer edge and holding the filtering medium, wherein at least one of the ribs comprises a projection towards at least one first rib that is adjacent thereto, and wherein the at least one first rib comprises a first rectilinear portion, a connection portion and a second rectilinear portion in this order, the second rectilinear portion being closer to the projection than the first rectilinear portion, wherein the connection portion is bent so that the second rectilinear portion is shifted away from the projection with respect to an imaginary straight line extending the first rectilinear portion.

As used herein, for conciseness and unless the context indicates otherwise, "a", "an", and "the" are intended to refer to "at least one" or "each" and to include plural forms as well. Conversely, generic uses of the plural form may include singular elements.

The axis of the filtering component is the axis around which the filtering component is annular. It may be an axis of symmetry or quasi-symmetry of the filtering component. The axial direction corresponds to the direction of the axis, and a radial direction is a direction perpendicular to the axis and intersecting this axis. Similarly, an axial plane is a plane containing the axis and a radial plane is a plane perpendicular to this axis. A circumference is understood as a circle belonging to a radial plane and whose center belongs to the axis. A tangential or circumferential direction is a direction tangential to a circumference; it is perpendicular to the axis but does not pass through the axis.

Unless otherwise specified, the adjectives inner and outer are used in reference to a radial direction, so that the inner part of an element is, in a radial direction, closer to the axis than the outer part of the same element.

The filtering medium may extend over part or all of the area between the inner edge and the outer edge. One side of the filtering medium defines the internal face of the filtering component, while the opposite side of the filtering medium defines the external face of the filtering component. The filtering component may be generally flat.

The internal face of the filtering component may be configured to be assembled to the internal face of a second, preferably identical, filtering component. The external face of the filtering component may be configured to be assembled to the external face of a third, desirably identical, filtering component. Thus, a stack can be obtained with identical filtering components, each filtering component being upside-down with respect to an adjacent filtering component. However, despite their ability to be assembled to identical filtering components, the internal and/or external faces of the filtering component may also be assembled to different filtering components.

The ribs hold the filtering medium with respect to the inner edge and the outer edge, to ensure mechanical robustness of the filtering component. The ribs may extend on either face or both faces of the filtering medium.

As mentioned previously, a projection may be provided on a rib, e.g. for mechanical purposes such as reinforcement of the filtering component or assembling the filtering component to other filtering components. Such a projection projects from one rib towards an adjacent rib, referred to herein as a first rib, e.g. in a substantially circumferential direction or at least in a radial plane. The projection may be formed of the same material as the rib from which it projects. The projection may be an obstacle to the passage of fluid. Thus, the projection *de facto* reduces the space that is available for the fluid to flow, between the projection and the first rib.

However, the first rib is provided with a first rectilinear portion and a second rectilinear portion with a connection portion in-between. Note that the first rib may comprise further portions, e.g. at an end of the first rectilinear portion or the second rectilinear portion. The first rectilinear portion, the connection portion and the second rectilinear portion may be directly connected with one another in that order, i.e. without any intermediate portion.

To rebalance the flow, the second rectilinear portion, that is closer to the projection than the first rectilinear portion, is shifted away from the projection. Specifically, the connection portion is bent so that the second rectilinear portion is shifted away from the projection with respect to an imaginary straight line extending the first rectilinear portion. Yet in other words, an imaginary straight line that extends the first rectilinear portion lies closer to the projection than the second rectilinear portion. Thus, the proposed first rib provides an increased distance between the projection and the first rib, which enables the flow of fluid in this area to be as well-balanced as in other areas of the filtering component which are not affected by the projection.

Rectilinear means that the first rectilinear portion and the second rectilinear portion incorporate (and preferably follow, as an barycentric line) a straight line from one end to the opposite end thereof, even if their side surfaces are textured, corrugated or otherwise nonplanar, or even if their cross-section area varies (e.g. increases or decreases). Thanks to these provisions, in addition to the above-detailed advantages, the first rib keeps a shape that is favorable for manufacturing, e.g. by injection molding, insofar as it limits stresses and ensures a good material integrity.

Optionally, at least one of the first rectilinear portion and the second rectilinear portion extends in a radial direction. Such provisions are beneficial for manufacturing and stress accommodation within the filtering component, considering its annular shape.

Optionally, the second rectilinear portion is closer to the outer edge than the first rectilinear portion. Conversely, the first rectilinear portion may be closer to the inner edge than the second rectilinear portion. In such embodiments, the projection may be closer to the outer edge than to the inner edge. As the outer edge generally has a greater circumference than the inner edge, placing the projection (and, as a consequence, the second rectilinear portion) closer to the outer edge minimizes the flow disruption created by the projection. Thus, the filtering hydraulic performance of the filtering component is improved.

Optionally, the second rectilinear portion supports a protrusion on the external face. The protrusion may be adapted to come against a corresponding protrusion of the aforementioned third filtering component, in order to assemble filtering components against each other. Providing a protrusion (e.g. an axial protrusion) on the second rectilinear portion, e.g. rather than on the outer edge, makes more space available for the fluid to flow across the outer edge, out of the filtering component. As a consequence, pressure drop across the filtering component is reduced.

Optionally, the projection belongs to an eyelet for assembling the filtering component to another filtering component. The eyelet may be provided on a rib and may define a blind or through hole, e.g. for the passage of an assembly rod or for a mere keyed connection from a filtering component to another.

Optionally, the filtering component comprises a plurality of the first ribs that are adjacent to one another, wherein an offset between the first rectilinear portion and the second rectilinear portion decreases from one first rib to another in a direction away from the projection. Thus, the offset of the first rib that is the closest to the projection can be passed on to a plurality of the first ribs, each one being less and less shifted away so that the consecutive spaces between the respective first ribs are as regular as desired. In these embodiments, the ribs can be designed to regularly hold the filtering medium.

For instance, a second one of the ribs that is adjacent to the at least one first rib opposite the projection comprises a third rectilinear portion, a second connection portion and a fourth rectilinear portion in this order, the fourth rectilinear portion being closer to the projection than the third rectilinear portion, wherein the second connection portion is bent so that the fourth rectilinear portion is shifted away from the projection with respect to a second imaginary straight line extending the third rectilinear portion, and wherein an offset between the third rectilinear portion and the fourth rectilinear portion is smaller than an offset between the first rectilinear portion and the second rectilinear portion. Subsequent ribs adjacent to the second one of the ribs can be defined in a similar manner, as appropriate.

Optionally, the filtering component comprises a first set of the at least one first rib adjacent to a first projection and a second set of the at least one first rib adjacent to a second projection, wherein the ribs angularly arranged between the first set and the second set are rectilinear or piecewise rectilinear. The first and second projections may be of the same type or of different type, and are preferably provided on different ribs, or on different sides of the same rib in the circumferential direction. Thus, the first set of the at least one first rib is different from the second set of the at least one first rib. Within the first set, the at least one first rib are consecutive ribs. Likewise, within the second set, the at least one first rib are consecutive ribs. Between the first set and the second set, other ribs may be provided, which are desirably rectilinear or piecewise rectilinear (as opposed to the first ribs of the first and second sets, which contain the bent connection portion). Thanks to these provisions, the ribs that are relatively far away from a projection remain simple, which is beneficial for mechanical and fluidic properties of the filtering component.

Optionally, a distance between the projection and the second rectilinear portion of the first rib adjacent to the projection is not less than 60% of a distance between the second rectilinear portion and a subsequent rib adjacent to the first rib opposite the projection, preferably not less than 70%, preferably not less than 80%, preferably not less than 90%. The distance is, by definition, the shortest distance between the projection and the second rectilinear portion immediately adjacent thereto. The offset of the second rectilinear portion is such that that distance is more than half the distance between the second rectilinear portion and the subsequent rib, namely at least 60% or more. The distance between the second rectilinear portion and the subsequent rib may be measured at the same radial position as the distance between the projection and the second rectilinear portion immediately adjacent thereto. Thus, the second rectilinear portion is sufficiently shifted away from the projection to favorably balance the flow on either side of the first rib, but also to mitigate constraints in the manufacturing process of the filtering element. Overall, flow balance is improved.

Optionally, the connection portion has a curved shape having an inflection point. An inflection point is a point where the connection portion switches from convex to concave, or vice versa. An inflection point enables a smooth transition between the first rectilinear portion and the second rectilinear portion, which is beneficial for manufacturing and stress accommodation.

Optionally, the connection portion has a smaller radius of curvature on a side of the inflection point closer to the inner edge than on a side of the inflection point closer to the outer edge. A smaller radius of curvature enables the connection portion to bend sharply, while a larger radius of curvature favors guiding the flow from the inner edge to the outer edge, be it either the flow of material when manufacturing the first rib or the flow of fluid to filter on either side of the first rib. Thus, the hydraulic performance and mechanical robustness of the filtering component is improved.

Optionally, the filtering component is adapted to be assembled against an identical filtering component so that their respective internal faces define a space that is circumferentially compartmented by at least some of the respective ribs of said internal faces that are configured to contact one another. When ribs of said internal faces contact one another to form compartments, the fluid cannot flow across such ribs without passing through the inner edge, the outer edge or the filtering medium.

Optionally, the ribs that are configured to come into contact with corresponding ribs of the internal face of the identical filtering component are main ribs which delimit sectors that circumferentially compartment the space between the facing respective internal faces of the filtering component and the identical filtering component.

The main ribs enable isolating a sector for backwashing. The external face needs not be compartmented. In some embodiments, the main ribs extend beyond the filtering medium to the external face, a thickness (or height, i.e. in the axial direction) of the ribs on the external face being less than a thickness of the ribs on the internal face. That is, the external face is provided with ribs extending the ribs provided on the internal face. However, an axial thickness of the ribs on the external face may be less than an axial thickness of the ribs on the internal face. Therefore, the pressure losses on the external face are reduced, while not decreasing the mechanical robustness of the filtering component.

In some embodiments, the filtering medium comprises a mesh. In some embodiments, the mesh is sloped from one end of the inner edge to the opposite end of the outer edge, which helps increasing the filtering surface and decreasing pressure losses.

Optionally, the at least one first rib is selected among the main ribs. Alternatively or in addition, the ribs further include intermediate ribs that are less thick than the main ribs at least on the internal face, wherein the at least one first rib is selected among the intermediate ribs. As opposed to the main ribs, the intermediate ribs may not delimit sectors in the space between internal faces, but may be present to reinforce the filtering component (e.g. to better hold the filtering medium) or for other purposes. Yet, the intermediate ribs may still form an obstacle for the fluid to flow, and they may be configured as the at least one first rib as appropriate.

Optionally, a width of the projection is greater than or equal to a circumference of the outer edge divided by four times a number of the sectors. The circumference of the outer edge divided by the number of sectors corresponds to an average circumferential width of a sector. The circumference of the outer edge divided by twice the number of sectors corresponds to an average half-sector width, and it is preferable that the average half-sector width is not greater than twice the width of the projection. Since the projection is wider, e.g. circumferentially, than half that average circumferential half-sector width, the projection potentially takes up a relatively large fraction of the sector and the proposed offset of the second rectilinear portion is particularly advantageous to balance the flow proximate the projection.

Optionally, at least one of the inner edge and the outer edge has at least one passage and the distance between the projection and the second rectilinear portion is greater than or equal to half a hydraulic diameter of the passage. The passage may be designed and sized as a fluid inlet into one of the sectors. Irrespective of its shape, that passage has a hydraulic diameter Dh, which corresponds to an equivalent diameter and is calculated as four times its cross-sectional area A divided by its perimeter P (Dh=4xA/P). By providing that the distance between the projection and the second rectilinear portion is greater than or equal to half a hydraulic diameter of the passage, it is ensured that the space available between the projection and the second rectilinear portion is consistent with the amount of fluid that gets into the sector through the passage. Therefore, flow balance is again improved.

The present disclosure is further directed to a filtering unit comprising a plurality of filtering components as previously described. The filtering unit may further comprise a rotary backwashing distributor configured to selectively isolate the passages to enable backwashing in the corresponding sectors.

The rotary backwashing distributor may have an opening, said opening being periodically and selectively put into communication with at least one of the passages, e.g. passages which are aligned perpendicularly to a direction of movement of the rotary backwashing distributor.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 is a perspective view of the internal face of a filtering component according to first embodiment.
- Fig. 2 is a perspective view of the external face of the filtering component of Fig. 1.
- Fig. 3 is an enlarged partial plan view of the internal face of the filtering component of Fig. 1.
- Fig. 4 illustrates, in perspective, the stacking of filtering components according to an embodiment.
- Fig. 5 is a partial perspective view of a filtering component according to a second embodiment.

### DETAILED DESCRIPTION OF EMBODIMENTS

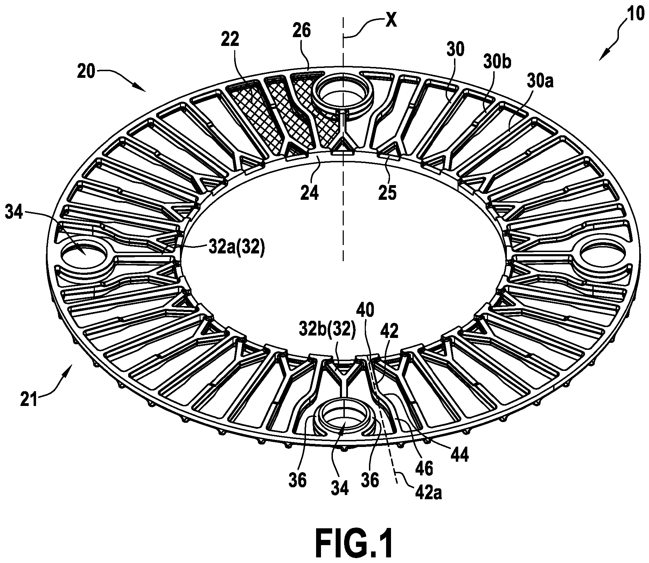

A filtering component 10 according to a first embodiment is described with reference to Figs. 1 to 4.

The filtering component 10 is annular about a central axis X, defining an axial direction (hereinafter "axial direction X").

Here, the filtering component 10 comprises an inner edge 24, an outer edge 26 and a partially illustrated filtering medium 22 extending between the inner edge 24 and the outer edge 26. The inner and outer edges 24, 26 are annular and may be circular about the central axis X. For instance, as shown, the inner and outer edges 24, 26 may be concentric. The inner edge 24 mainly extends in a radial plane. The outer edge 26 mainly extends in a radial plane.

In this embodiment, the diameter of the outer edge 26 is in the range from about 80 mm (millimeters) to about 700 mm.

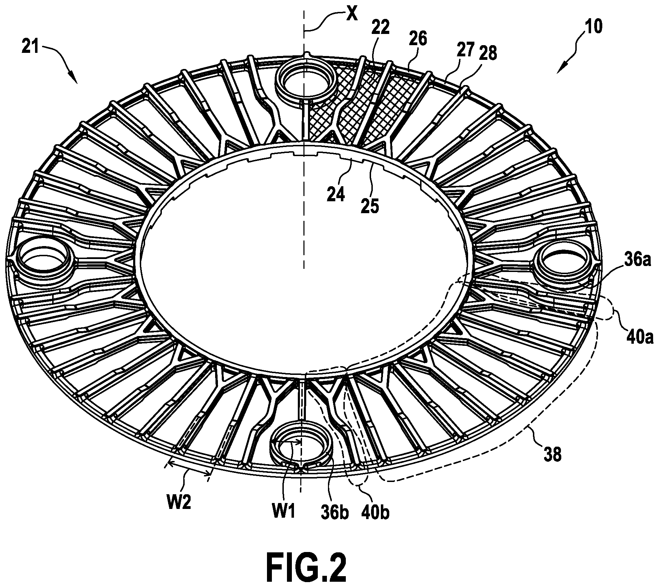

The filtering medium 22 may be a filtering mesh (hereinafter "mesh 22", without any loss of generality) or any other filtering medium. The mesh 22 defines, on either sides thereof in the axial direction X, an internal face 20, shown in Fig. 1, and an external face 21, shown in Fig. 2, of the filtering component 10. The characteristics of the mesh 22 may be adapted to the fluid to filter and the expected impurities to remove from that fluid.

The filtering component 10 comprises ribs 30 to hold the filtering medium 22. For instance, the ribs 30 may embed portions of the mesh 22. The ribs 30 extend from the inner edge 24 to the outer edge 26. The ribs 30 are distributed circumferentially, e.g. regularly, to robustly fasten the mesh 22 to the inner edge 24 and the outer edge 26. Without prejudice to the more detailed description that follows, the ribs 30 may generally extend in the radial direction.

The filtering component 10 may comprise two types of ribs 30, namely main ribs 30a and intermediate ribs 30b. The main ribs 30a of the filtering component 10 are ribs that are configured to come into contact with corresponding ribs of the internal face of an identical filtering component assembled against the filtering component 10, in order to delimit sectors that circumferentially compartment the space between the facing respective internal faces of the filtering component 10 and the identical filtering component. Thus, on the internal face 20, the main ribs 30a are the most prominent axially because they aim to form a solid separation between sectors by lying against corresponding main ribs of an identical filtering component.

The main ribs 30a may be provided at least on the internal face 20, possibly on the external face 21 too. The main ribs 30a on the internal face 20 and on the external face 21 may face one another on opposite sides of the mesh 22. In other words, the main ribs 30a on the internal face 20 and on the external face 21 may be in axial correspondence with one another. In yet other words, the main ribs 30a may extend from the internal face 20, beyond the filtering medium 22 and to the external face 21.

In contrast, an intermediate rib 30b is a rib 30 that is not a main rib 30a. For instance, the intermediate ribs 30b are less thick than the main ribs 30a, at least on the internal face 20. In other words, on the internal face 20, the intermediate ribs 30b may not extend axially as far as the main ribs 30a, i.e. may be at least partially recessed as compared to the main ribs 30a, so that the intermediate ribs 30b do not form a separation between sectors. Yet in other words, an axially distal surface of the intermediate rib 30b may be closer to the mesh 22 than an axially distal surface of the main rib 30a. However, other configurations are possible to ensure that the intermediate ribs 30b do not further delimit sectors. The intermediate ribs 30b may be provided to reinforce the mesh 22 against pressure gradients.

When the filtering component 10 is assembled against an identical filtering component so that their respective internal faces face each other, their respective intermediate ribs 30b may face each other in a direction perpendicular to the filtering mesh 22 (e.g. axially or substantially axially) although they do not come into contact with each other, in order to facilitate the flow of filtered fluid and thus decrease pressure losses.

Hereinafter, for conciseness, when the distinction between the main ribs 30a and the intermediate ribs 30b is irrelevant, a rib may simply be referred to as a rib 30.

Besides, as mentioned before, at least one of the inner edge 24 and the outer edge 26, here the inner edge 24, may have one or more passages 25 respectively communicating with corresponding ones of the sectors on the internal face 20. The passages 25 may be provided as notches or cutouts in the inner edge 24. The passages 25 may be provided between consecutive main ribs 30a.

On the other hand, the other edge, here the outer edge 26, may be devoid of passages on the internal face 20, e.g. such that when the filtering component 10 is assembled against an identical filtering component so that their respective internal faces 20 face each other, their respective outer edges 26 come in sealing contact with one another in order to prevent flow from the space defined between said internal faces through the outer edges 26.

Figure 2 shows the external face 21 of the filtering component 10 of Fig. 1. As illustrated in Fig. 2, on the external face 21, the outer edge 26 has passages 27. The passages 27 may be provided as notches or cutouts in the outer edge 26, or even as an opening between localized pillars 28 that axially project from the outer edge 26 or from the ribs 30. In particular, the passages 27 may be provided between consecutive ribs 30.

The filtering component 10 may be manufactured by molding around the mesh 22. In other words, the filtering component 10 may be manufactured by injection molding or the like, wherein the mesh 22 forms an insert in the mold. The molded portions may be made of metal (e.g. an aluminum alloy) or of plastics material, especially polymers. The ribs 30 and the inner and outer edges 24, 26 may be coated in an elastomer in order to avoid leaks between filtering components 10.

In operation, a fluid to be filtered, e.g. a liquid such as oil or water, can enter through a passage 25 of the inner edge 24 of a filtering component 10, cross the filtering mesh 22 to pass from the internal face 20 to the external face 21, whereby the liquid is filtered, and flow out of the filtering component 10 through a passage 27 of the outer edge 26. The opposite flow direction is possible as well.

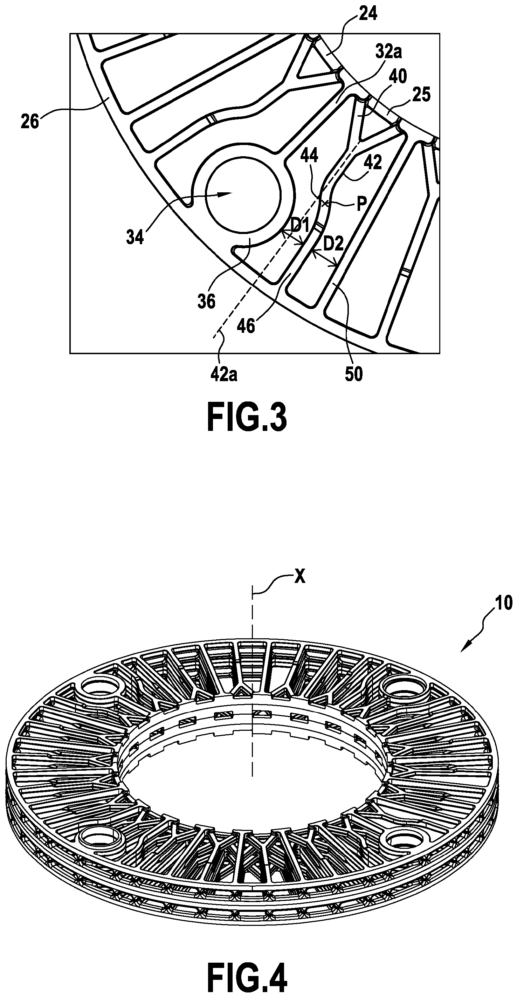

As shown in Fig. 4, in order to increase the available filtering surface, a plurality of filter components 10 can be stacked to form a filtering unit. As mentioned before, the filtering components 10 are assembled one against the other such that an internal face 20 faces the internal face of the neighboring filtering component (e.g. a first identical filtering component) and that the external face 21 faces the external face of the neighboring filtering component (e.g. a second identical filtering component).

With reference back to Fig. 1, at least one of the ribs 30 comprises a projection towards at least one first rib that is adjacent thereto. For instance, a rib 32 (e.g. one of the main ribs 30a, shown at 32a, or one of the intermediate ribs 30b, shown at 32b) is provided with an eyelet 34 for assembling the filtering component 10 to another filtering component. The eyelet 34 may be closer to the outer edge 26 than to the inner edge 24. Specifically, the eyelet 34 may be located between the outer edge 26 and a rectilinear portion of the rib 32. The eyelet 34 has a generally annular shape (e.g. circular or polygonal) that circumferentially extends on either side of the rib 32. Thus, the eyelet 34 defines two projections 36, e.g. two half-circles projecting towards opposite sides of the rib 32. In other words, each projection 36 belongs to the eyelet 34 and is provided on a rib 32.

As shown in Fig. 2, considering an average half-sector width W2 circumferentially, wherein the average half-sector width W2 is equal to a circumference of the outer edge 26 divided by twice a number of the sectors, a width W1 of the projection 36 preferably satisfies:
0.5 x W2 < W1 and/or W1 < 2 x W2. That is, the projection 36 is wide enough so that shifting the first rib 40 is advantageous, and narrow enough not to fully block a half-sector. In this example, the number of sectors may be between 18 and 26. Depending in particular on its diametrical size, the filtering component 10 can have fewer or more sectors, due e.g. to mechanical limitations.

As illustrated in Fig. 1, each projection 36 projects towards another rib, referred to as the first rib 40, that is adjacent to the aforementioned rib 32. When the rib 32 is one of the main ribs 30a, the first rib 40 may be one of the intermediate ribs 30b, and vice versa. However, other configurations are envisaged, wherein the rib 32 carrying the projection 36 and the first rib 40 are of the same type.

As stated above, the first rib 40 comprises a first rectilinear portion 42, a connection portion 44 and a second rectilinear portion 46 in this order. The first rectilinear portion 42 may be directly or indirectly connected to the inner edge 24. An end of the first rectilinear portion 42 opposite the inner edge 24 is directly or indirectly connected to the connection portion 44. An end of the connection portion 44 opposite the first rectilinear portion 42 is directly or indirectly connected to the second rectilinear portion 46. An end of the second rectilinear portion 46 opposite the connection portion is directly or indirectly connected to the outer edge 26. A connection is understood as direct if the two portions are linked with each other without any intermediate portion in-between; conversely, a connection is understood as indirect if the two portions are linked to each other through at least one other rectilinear or non-rectilinear portion of the first rib 40.

In this example, the second rectilinear portion 46 is closer to the outer edge 26 than the first rectilinear portion 42, but the inner edge 24 and the outer edge 26 could be swapped.

The second rectilinear portion 46 distinguishes from the first rectilinear portion 42 in that the second rectilinear portion 46 is closer to the projection 36 than the first rectilinear portion 42, e.g. with respect to a radial direction.

Besides, as shown in Figs. 1 and 3, the connection portion 44 is bent so that the second rectilinear portion 46 is shifted away from the projection 36 with respect to an imaginary straight line 42a extending the first rectilinear portion 42. In doing so, the second rectilinear portion 46 is provided further away from the projection 36 than if the second rectilinear portion 46 were in alignment with the first rectilinear portion 42.

At least one of the first rectilinear portion 42 and the second rectilinear portion 46 may extend in a radial direction. As illustrated, both the first rectilinear portion 42 and the second rectilinear portion 46 may extend in a radial direction, although not along the same radius due to the shift. For doing so, for instance, the second rectilinear portion 46 may be shifted from the first rectilinear portion 42 in a substantially circumferential direction.

As shown in Fig. 3, the shift of the second rectilinear portion 46 with respect to the imaginary line 42a is such that a distance D1 between the projection 36 and the second rectilinear portion 46 of the first rib 40 adjacent to the projection 36 is not less than 60% of a distance D2 between the second rectilinear portion 46 and a subsequent rib 50 adjacent to the first rib 40 opposite the projection 36. This ensures sufficient flow passage between the projection 36 and the second rectilinear portion 42. Desirably, the distance D1 may be not less than 70% of the distance D2, preferably not less than 80%, preferably not less than 90%. As illustrated, the distance D1 is the minimum distance between the projection 36 and the second rectilinear portion 46, and the distance D2 is taken on the same circumference as the distance D1. For instance, D1 may not be less than 2 mm, preferably than 2.5 mm.

In relation to the passages 25, 27, the shift may be sized so that the distance D1 between the projection 36 and the second rectilinear portion 46 is greater than or equal to half a hydraulic diameter Dh of the passage (e.g. the smaller one of passages 25, 27). For instance, in this example, the passages 25 of the inner edge 24 are smaller than the passages 27 of the outer edge. A passage 25 of the inner edge 24 has a hydraulic diameter Dh that is equal to four times its perimeter divided by its cross-sectional area. Thus, the distance D1 is set so that D1≥Dh/2.

The connection portion 44 may assume a shape that is appropriate for transitioning from the first rectilinear portion 42 to the second rectilinear portion 46. For instance, as illustrated, the connection portion 44 may have a curved shape having an inflection point P. The inflection point P separates two arcuate sections, the respective centers of curvature of which are located on opposite sides of the connection portion 44.

The radii of curvature of the arcuate sections may be the same or may differ from each other. For instance, the connection portion 44 may have a smaller radius of curvature on a side of the inflection point P closer to the inner edge 24 than on a side of the inflection point P closer to the outer edge 26 (or more generally closer to the projection 36). In other words, the connection portion's bend towards the first rectilinear portion 42 may be sharper than the connection portion's bend towards the second rectilinear portion 46.

With reference back to Figs. 1 and 2, the filtering component 10 may comprise a plurality of projections 36, e.g. two sides of an eyelet 34, projections from a plurality of eyelets 34 or even other types of projections. In such conditions, the above principles may be applied to part or all of the projections 36 and the ribs adjacent thereto.

Specifically, the filtering component 10 may comprise a first set 40a of the at least one first rib 40 adjacent to a first projection 36a and a second set 40b of the at least one first rib 40 adjacent to a second projection 36b. Desirably, the ribs 30 angularly arranged between the first set 40a and the second set 40b, shown at 38, are rectilinear or piecewise rectilinear. Construction of the ribs 38 that are relatively away from the projections 36 is therefore kept simple.

In the embodiment described with reference to Figs. 1-4, each projection 36 is associated with a single most-adjacent first rib 40 that comprises the first rectilinear portion 42, the connection portion 44 and the second rectilinear portion 46 as described above. That is, the rib adjacent to that single first rib 40 opposite the projection 36 may be a regular rib 30, not qualifying as a first rib 40 as described above.

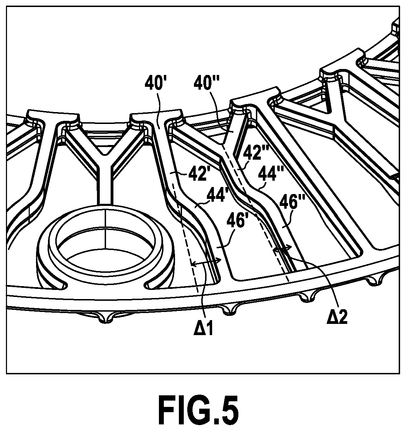

In contrast, Fig. 5 shows a variant of the filtering component 10, in which a plurality of first ribs 40 is associated with a given projection 36. The first ribs 40 of the plurality are adjacent to one another (possibly apart from possible intervening or sandwiched ribs, e.g. intermediate ribs 30b between consecutive main ribs 30a or vice versa). In this setting, an offset between the first rectilinear portion 42 and the second rectilinear portion 44 may decrease from one first rib 40 to another in a direction away from the projection 36.

Specifically, Fig. 5 shows a first one of the first ribs 40', having the first rectilinear portion 42', the connection portion 44' and the second rectilinear portion 46' as described above, and a second one of the first ribs 40", adjacent to the first one of the first ribs 40' opposite the projection 36 and having the first rectilinear portion 42" (also referred to as the third rectilinear portion), the connection portion 44" (also referred to as the second connection portion) and the second rectilinear portion 46" (also referred to as the fourth rectilinear portion) as described above too. As illustrated, the offset Δ2 between the third rectilinear portion 42" and the fourth rectilinear portion 46" is smaller than the offset Δ1 between the first rectilinear portion 42' and the second rectilinear portion 46'. While this pattern has been described with the two first ribs 40', 40" immediately adjacent to the projection 36, this pattern may be carried on to subsequent ribs adjacent to the second one of the first ribs 40".

Although the present disclosure refers to specific exemplary embodiments, modifications may be provided to these examples without departing from the general scope of the invention as defined by the claims. More generally, individual characteristics of the different illustrated/mentioned embodiments may be combined in additional embodiments. Therefore, the description and the drawings should be considered in an illustrative rather than in a restrictive sense.

## Claims

1. A filtering component (10) for a filtering unit with backwashing, the filtering component (10) being annular and comprising an inner edge (24), an outer edge (26) and a filtering medium (22) extending between the inner edge (24) and the outer edge (26), the filtering component having an internal face (20) and an external face (21) on either side of the filtering medium (22), and circumferentially distributed ribs (30) extending between the inner edge (24) and the outer edge (26) and holding the filtering medium (22), wherein at least one of the ribs (32) comprises a projection (36) towards at least one first rib (40) that is adjacent thereto, and wherein the at least one first rib (40) comprises a first rectilinear portion (42), a connection portion (44) and a second rectilinear portion (46) in this order, the second rectilinear portion (46) being closer to the projection (36) than the first rectilinear portion (42), wherein the connection portion (44) is bent so that the second rectilinear portion (46) is shifted away from the projection (36) with respect to an imaginary straight line (42a) extending the first rectilinear portion (42).

2. The filtering component of claim 1, wherein at least one of the first rectilinear portion (42) and the second rectilinear portion (46) extends in a radial direction.

3. The filtering component of claim 1 or 2, wherein the second rectilinear portion (46) is closer to the outer edge (26) than the first rectilinear portion (42).

4. The filtering component of any one of claims 1 to 3, wherein the projection (36) belongs to an eyelet (34) for assembling the filtering component (10) to another filtering component.

5. The filtering component of any one of claims 1 to 4, comprising a plurality of the first ribs (40', 40") that are adjacent to one another, wherein an offset between the first rectilinear portion (42', 42") and the second rectilinear portion (46', 46'') decreases from one first rib to another in a direction away from the projection (36).

6. The filtering component of any one of claims 1 to 5, comprising a first set (40a) of the at least one first rib adjacent to a first projection (36a) and a second set (40b) of the at least one first rib adjacent to a second projection (36b), wherein the ribs (38) angularly arranged between the first set (40a) and the second set (40b) are rectilinear or piecewise rectilinear.

7. The filtering component of any one of claims 1 to 6, wherein a distance (D1) between the projection (36) and the second rectilinear portion (46) of the first rib (40) adjacent to the projection is not less than 60% of a distance (D2) between the second rectilinear portion (46) and a subsequent rib (50) adjacent to the first rib (40) opposite the projection (36), preferably not less than 70%, preferably not less than 80%, preferably not less than 90%.

8. The filtering component of any one of claims 1 to 7, wherein the connection portion (44) has a curved shape having an inflection point (P).

9. The filtering component of claim 8, wherein the connection portion (44) has a smaller radius of curvature on a side of the inflection point (P) closer to the inner edge (24) than on a side of the inflection point (P) closer to the outer edge (26).

10. The filtering component of any one of claims 1 to 9, wherein the filtering component (10) is adapted to be assembled against an identical filtering component so that their respective internal faces (20) define a space that is circumferentially compartmented by at least some of the respective ribs (30) of said internal faces (20) that are configured to contact one another.

11. The filtering component of claim 10, wherein the ribs (30) that are configured to come into contact with corresponding ribs of the internal face of the identical filtering component are main ribs (30a) which delimit sectors that circumferentially compartment the space between the facing respective internal faces (20) of the filtering component and the identical filtering component, and wherein the at least one first rib (40) is selected among the main ribs (30a).

12. The filtering component of claim 11, wherein a width (W1) of the projection (36) is greater than or equal to a circumference of the outer edge (26) divided by four times a number of the sectors.

13. The filtering component of claim 11 or 12, wherein the ribs (30) further include intermediate ribs (30b) that are less thick than the main ribs (30a) at least on the internal face (20), wherein the at least one first rib (40) is selected among the intermediate ribs (30b).

14. The filtering component of any one of claims 1 to 13, wherein at least one of the inner edge (24) and the outer edge (26) has at least one passage (25, 27) and the distance (D1) between the projection (36) and the second rectilinear portion (46) is greater than or equal to half a hydraulic diameter of the passage (25, 27).

15. A filtering unit comprising a plurality of filtering components (10) as claimed in any one of claims 1 to 14.
